# EUROPÄISCHE PATENTSCHRIFT

(11) **EP 2 793 067 B1**
(45) Veröffentlichungstag und Bekanntmachung des Hinweises auf die Patenterteilung: **14.10.2015**
(21) Anmeldenummer: 14164181.1
(22) Anmeldetag: 10.04.2014
(51) Int. Cl.: G02B 21/08, G02B 21/12

(54) **Verfahren zur Beleuchtung eines Objektes in einem digitalen Lichtmikroskop, digitales Lichtmikroskop und Hellfeld-Auflichtbeleuchtungsvorrichtung für ein digitales Lichtmikroskop**
Method for illuminating an object in a digital light microscope, digital light microscope and bright field reflected light device for a digital light microscope
Procédé d'éclairage d'un objet dans un microscope optique numérique, microscope optique numérique et dispositif d'éclairage par lumière incidente en fond clair pour un microscope optique numérique

(30) Priorität: 19.04.2013 DE 102013006996
(43) Veröffentlichungstag der Anmeldung: 22.10.2014
(73) Patentinhaber: Carl Zeiss Microscopy GmbH, 07745 Jena (DE)
(72) Erfinder: Tandler, Hans, 07745 Jena (DE); Knoblich, Johannes, 07747 Jena (DE); Stehr, Dominik, 07743 Jena (DE); Gaiduk, Alexander, 07749 Jena (DE); Geißler, Enrico, 07749 Jena (DE); Buchheister, Jan, 07751 Jena (DE); Funck, Max, 99423 Weimar (DE)
(74) Vertreter: Müller, Silke

(56) Entgegenhaltungen:
- EP-A1- 2 570 840
- DE-A1- 10 239 548
- JP-A- 2001 154 103
- JP-A- 2005 227 442
- US-B1- 7 576 911

## Beschreibung

Die Erfindung betrifft ein Verfahren zur Beleuchtung eines Objektes in einem digitalen Lichtmikroskop und ein digitales Lichtmikroskop mit einer koaxiale Hellfeld-Auflichtbeleuchtungsvorrichtung.

Aus dem Stand der Technik sind verschiedene Beleuchtungsstrategien für die Lichtmikroskopie bekannt. Zunächst werden Durchlicht- und Auflichtmikroskopie unterschieden. Insbesondere in der Auflichtmikrokopie wird die Probe aus der Richtung des Objektivs beleuchtet. Hierfür wird seit sehr langer Zeit die so genannte Köhlersche Beleuchtung verwendet, um unabhängig voneinander die Apertur und den ausgeleuchteten Objektdurchmesser beeinflussen zu können. Das Licht wird dabei ausgehend von einer Lichtquelle durch die Leuchtfeldblende hindurch in einen Bereich geleitet, in dem Farb- und Reduktionsfilter eingesetzt werden können. Danach passiert das Licht die Aperturblende und trifft daraufhin auf einen halbdurchlässigen Spiegel, der den größten Anteil des Lichts in Richtung des Objektivs, das auch die Kondensorfunktion beinhaltet, umlenkt. Von dort wird es durch das Objektiv auf das Objekt fokussiert. Von diesem wird das Licht reflektiert, und es durchläuft erneut das Objektiv. Das Licht durchläuft wieder den halbdurchlässigen Spiegel und wird in Richtung der Okulare bzw. des Bilderfassungssystems umgelenkt. Nach dem Passieren der Okulare trifft das Licht auf die Netzhaut des Betrachters oder den Sensor des Bilderfassungssystems.

Als Alternative zur Köhlerschen Beleuchtung findet die so genannte "kritische Beleuchtung" oder Nelson-Beleuchtung Anwendung, bei der der Kollektor das Bild der Lichtquelle in die Präparatebene abbildet. Dies führte bisher zu einem sehr unregelmäßig ausgeleuchteten Bildfeld sowie zu einer störenden Abbildung der Lichtquelle im Präparat. Um das Bildfeld dennoch gleichmäßiger auszuleuchten, können Mattscheiben zwischen Kollektor und Präparat eingesetzt werden um ein diffuses Licht zu erzeugen. Dabei geht allerdings aufgrund der Streuung durch die Mattscheiben Licht verloren.

Im Stand der Technik werden zunehmend LED's als Beleuchtungslichtquellen verwendet und diese dabei im bisherigen Strahlengang platziert.

Beispielsweise beschreibt die WO 2007/111735 ein Mikroskop zur Untersuchung biologischer Proben mit einer LED-Beleuchtungsquelle im Durchlichtverfahren, welche als LED-Feld ausgeführt ist. Die LED's können separat geschaltet und in Helligkeit und Farbe gesteuert werden.

Aus der EP 2 551 712 A1 ist ein Beleuchtungsverfahren für ein Mikroskop bekannt, bei dem die Probe in Durchlicht-Hellfeldbeleuchtung oder in Auflicht-Fluoreszenzbeleuchtung untersucht wird, wobei als Lichtquelle für die Durchlicht-Hellfeldbeleuchtung eine Weißlicht-LED verwendet wird und bei Auflicht-Fluoreszenzbeleuchtung ein Shutter an einem Ort des Beleuchtungsstrahlenganges der Durchlicht-Hellfeldbeleuchtung eingeschaltet wird.

Die JP 2010-204531 A beschreibt ein Zoom-Mikroskop mit einem optischen Beleuchtungssystem mit einer LED-Lichtquelle.

Die JP 2010-156939 A offenbart ein Mikroskop mit einer durch optische Maßnahmen verbesserten LED-Beleuchtungseinheit.

Aus der JP 2010072503 A ist ein Beleuchtungsregler für eine LED-Beleuchtungseinrichtung eines Mikroskopes bekannt, bei der LED-Module mit gespeicherten Charakteristika auswechselbar sind.

Die JP 2009 063856 A beschreibt ein Objektiv mit einer ringförmigen LED-Dunkelfeld-Beleuchtungseinheit. Dieses Objektiv kann mit einem Hellfeld-Mikroskop verwendet werden. Aus der WO 2008/073728 A1 ist ein Mikroskop mit einer LED-Beleuchtungseinrichtung bekannt, die eine Köhlersche Beleuchtung darstellt.

Die DE 10 2006 016 358 A1 beschreibt ein tragbares Reisemikroskop mit einer effizienten LED-Beleuchtung.

JP-A-2001154103 offenbart ein Verfahren und eine Vorrichtung zur Beleuchtung eines Objektes in einem digitalen Lichtmikroskop, bei denen eine Hellfeld-Auflichtbeleuchtung und eine Dunkelfeld-Auflichtbeleuchtung erfolgen.

Aufgrund der Vielzahl an optischen Bauteilen im Beleuchtungsstrahlengang der Köhlerschen Beleuchtung lässt die Effizienz der Ausleuchtung insbesondere bei der Hellfeldbeleuchtung trotz der Verwendung vom LED's oftmals zu wünschen übrig. Dies ist insbesondere in der digitalen Mikroskopie kritisch, da hier die Bilder vom Sensor nahezu in Echtzeit verarbeitet und dargestellt werden müssen und eine hohe Lichtstärke die Bildrate vergrößert.

Der Erfindung liegt daher die Aufgabe zugrunde, bei einem Digitalmikroskop eine gleichmäßige und hocheffiziente Ausleuchtung des zu beobachtenden Objektes sowohl im koaxialen Auflicht-Hellfeld als auch im Auflicht-Dunkelfeld zu ermöglichen mit dem Ziel, die angestrebten Ausleuchtungsparameter vom Objekt bis zum Bildaufnahmesensor beizubehalten und eine hohe Bildrate von bis zu 30 Bildern/s zur erzielen. Außerdem sollen bereits mit der Beleuchtung des Objektes günstige Voraussetzungen für Kontrastvariationen geschaffen werden.

Die Aufgabe wird durch ein Verfahren zur Beleuchtung eines Objektes in einem digitalen Lichtmikroskop gemäß Anspruch 1 und durch ein digitales Lichtmikroskop mit den Merkmalen des Anspruchs 5gelöst.

Die Vorteile der Erfindung sind insbesondere darin zu sehen, dass in einem digitalen Lichtmikroskop eine optimale Beleuchtung für verschiedene Anwendungsfälle (Hellfeld, Dunkelfeld und Kombination daraus) in einer effizienten, kostengünstigen und platzsparenden Weise möglich ist.

In einem erfindungsgemäßen Verfahren zum Beleuchten eines Objektes in einem Digitalmikroskop werden eine Hellfeld-Auflichtbeleuchtung und eine Dunkelfeld-Auflichtbeleuchtung des Objektes auf eine äußerst effiziente Weise ermöglicht und miteinander kombiniert. Dabei werden für beide Beleuchtungsarten Leuchtdioden verwendet. Insbesondere Halbleiter-Leuchtdioden sind in vielen verschiedenen Ausführungsformen und Bauformen verfügbar und daher in bevorzugten Ausführungsformen der Erfindung verwendet.

Beispielsweise können Hochleistungsleuchtdioden, Leuchtdioden-Dies (Chips), SMD-Leuchtdioden oder andere gewählt werden. Der Fachmann kann aus einer großen Zahl technologischer Varianten die für den Anwendungsfall richtige Leuchtdiode auswählen. Auch organische Leuchtdioden können in alternativen Ausführungsformen der Erfindung sehr vorteilhaft verwendet werden.

Durch die Wahl der Lichtquellen und die richtige Kombination der Beleuchtungsarten werden insbesondere günstige Voraussetzungen für Kontrastvariationen und schnellen Bildeinzug in der Digitalmikroskopie geschaffen.

Besonders effizient werden LED-Chips mit einem rechteckigen Querschnitt verwendet, deren Seitenverhältnis dem eines Bilderfassungssensors einer Bilderfassungseinheit des Mikroskopes entspricht. Dadurch wird das Objektfeld so ausleuchtet, dass kein Störlicht außerhalb des Bildaufnahmebereiches auftritt.

Hellfeld- und Dunkelfeldbeleuchtung können je nach Anwendungsfall getrennt oder kombiniert betrieben werden. Sowohl bei der Hell- als auch bei der Dunkelfeldbeleuchtung sind Variationen der Helligkeit, Farbe und/oder des Azimuts möglich.

Werden beispielsweise die Leuchtdioden der Dunkelfeldbeleuchtung nacheinander, also mit wechselndem Azimut geschaltet, so können aus den erfassten Bildern 3D-Informationen gewonnen und Oberflächen-Topografien errechnet werden.

Weiterhin ist es, bedingt durch die kurzen Schaltzeiten der LED's möglich, Blitzlicht- oder Stroboskop-Modi zu schalten, mit denen sich schnell bewegende Objekte vorteilhaft darstellbar sind.

Ein erfindungsgemäßes digitales Lichtmikroskop umfasst zumindest ein Objektiv, eine Hellfeld-Auflichtbeleuchtungsvorrichtung, eine ringförmige Dunkelfeld-Auflichtbeleuchtungsvorrichtung, welche jeweils mit Leuchtdioden, in einer bevorzugten Ausführungsform mit Weisslicht-LED's betrieben werden, und eine Steuereinheit zur gleichzeitigen oder separaten Ansteuerung der Hellfeld- und Dunkelfeldfeld-Auflichtbeleuchtungsvorrichtung.

Beide Beleuchtungsvorrichtungen sind dabei erfindungsgemäß als so genannte "kritische" Beleuchtung oder Nelson-Beleuchtung konfiguriert, bei der eine Abbildung der Lichtquelle in die Objektebene erfolgt. Durch die sehr effizient in Bezug auf Lichtausbeute und Kosten aufgebaute Beleuchtungsoptik ist diese äußerst platzsparend konzipierbar und optimal an den zu verwendenden Sensor anpassbar.

Die "kritische" Beleuchtung kann mit Leuchtdioden ausgeführt werden, weil diese eine geringere Tiefenausdehnung und bessere Homogenität, als bisher für diese Beleuchtungsart verwendeten Halogenleuchten. Außerdem besitzen sie eine sehr gute Lichtausbeute. Aufgrund der günstigen Eigenschaften der LED (insbesondere im Fall einer rechteckigen LED) ist im Strahlengang anstelle einer aufwendigen Optik ein vergleichsweise moderater Homogenisator ausreichend, um eine sehr homogene Ausleuchtung des Objektes zu erreichen.

Der Homogenisator kann bei der Hellfeld-Auflichtbeleuchtungsvorrichtung beispielsweise ein Lichtmischstab sein, der in einer bevorzugten Ausführungsform auch eine entsprechende Ablenkung des Lichtstrahls in den Strahlengang des Objektivs übernimmt, wodurch der Umlenkspiegel entfallen kann. Der Lichtmischstab kann dabei vorteilhafterweise als hohlleitender Lichtmischstab mit äußerst kurzer Baulänge ausgeführt sein, da der Anspruch an die Homogenisierung durch Anpassung der kritischen Beleuchtung LED nach Eingang Hohlintegrator gering ist (Verhältnis x:y-Ausdehung Quelle ~ x:y-Ausdehung Mischstab ~ x:y-Ausdehnung Objektfeld). Es müssen keine Inhomogenitäten durch unvorteilhafte Füllung des Mischstabeinganges beseitigt werden, nur Inhomogenitäten durch Bondingdrähte der Quelle an sich. Ein vollleitender Lichtmischstab müsste entsprechend länger dimensioniert werden.

Die Dunkelfeld-Auflichtbeleuchtungsvorrichtung ist vorzugsweise als Beleuchtungsring zur Ankopplung an das Objektiv des digitalen Lichtmikroskopes ausgeführt. Der Beleuchtungsring umfasst mindestens zwei Leuchtdioden (nachfolgend als LED bezeichnet), die auf einem, konzentrisch zum Objektiv ausgerichteten Beleuchtungsring vorzugsweise diametral angeordnet sind. Bei der Verwendung von mehr als zwei Leuchtdioden sind diese selbstverständlich über den Umfang des Beleuchtungsringes verteilt angeordnet. Der Beleuchtungsring ist dabei vorteilhafterweise in seinem Durchmesser nicht größer, als das Objektiv selbst, wodurch die Schwenkbarkeit des Objektivs im Digitalmikroskop nicht beeinträchtigt wird.

Der Beleuchtungsring umfasst vorteilhafterweise eine elektronische Schnittstelle zur Ansteuerung der Leuchtdioden über das Objektiv, welches dann auch eine solche Schnittstelle aufweisen muss. Über diese elektronische Schnittstelle wird auch eine Kalibrierung der LED's durchgeführt, um gleiche Helligkeitswerte für alle LED's einzustellen und die Kalibriereinstellungen zu speichern. Solche elektronischen Schnittstellen sind dem Fachmann bekannt.

Der Beleuchtungsring kann ebenfalls alternativ auch mit organischen Leuchtdioden ausgestattet werden, welche in ihrer flächigen Ausdehnung ideal an das Sensorformat angepasst werden kann und eine sehr gute Homogenität aufweist, so dass sogar auf eine Optik zur moderaten Homogenisierung verzichtet werden kann.

Teilaspekte der Erfindung werden nachfolgend anhand der Figuren näher erläutert.

Es zeigen:
- Fig. 1:: eine erste bevorzugte Ausführungsform einer Hellfeld-Auflichtbeleuchtungsvorrichtung in einer Prinzipdarstellung;
- Fig. 2:: eine zweite bevorzugte Ausführungsform der Hellfeld-Auflichtbeleuchtungsvorrichtung in einer Prinzipdarstellung;
- Fig. 3:: eine dritte bevorzugte Ausführungsform der Hellfeld-Auflichtbeleuchtungsvorrichtung in einer Prinzipdarstellung;
- Fig. 4:: eine bevorzugte Ausführungsform einer Dunkelfeld-Beleuchtungsvorrichtung in einer perspektivischen Prinzipdarstellung.

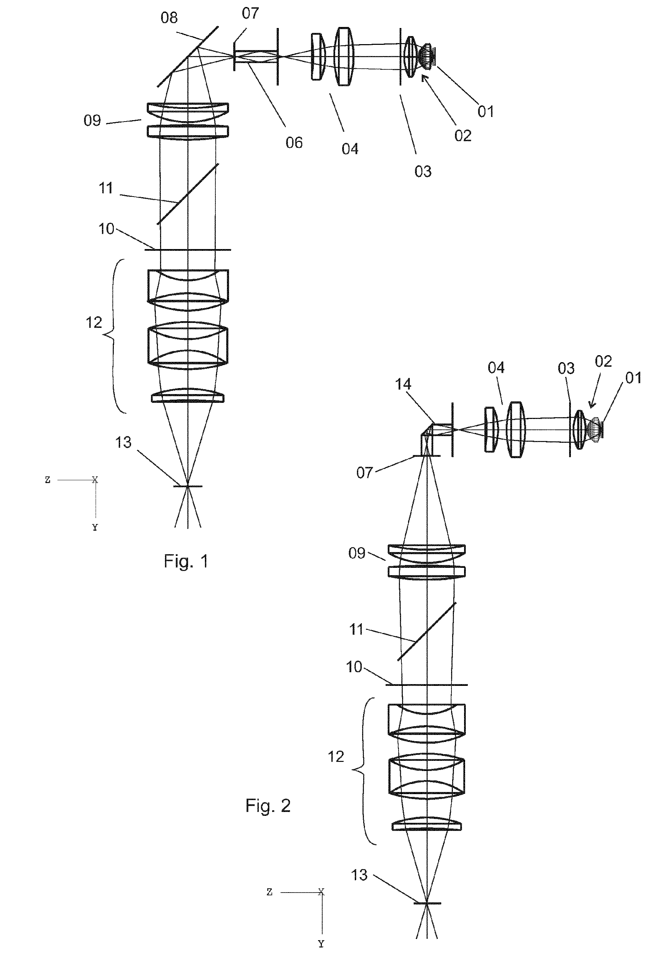

Fig. 1 zeigt eine erste bevorzugte Ausführungsform einer erfindungsgemäße Hellfeld-Auflichtbeleuchtungsvorrichtung in einer Nelson-Konfiguration oder sogenannten "kritischen" Beleuchtung. Die Vorrichtung umfasst als Lichtquelle mindestens eine LED 01, die mit einer entsprechenden Optikbaugruppe als Kollektor 02 ausgestattet ist. Das von der LED 01 abgestrahlte Licht gelangt in einem Beleuchtungsstrahlengang durch eine zu einer Aperturblende 10 konjugierten Ebene 03, über eine Zwischenoptik 04 in einen als Lichtmischstab 06 ausgeführten Homogenisator. In der konjugierten Ebene 03 kann in einer alternativen Ausführungsform eine veränderliche zweite Aperturblende verwendet werden, um Beleuchtungs- und Beobachtungsapertur unabhängig voneinander einstellen zu können. Damit werden insbesondere Kontrastverbesserungen erzielt.

Idealerweise entsteht am Eingang des Homogenisators ein Bild der Lichtquelle, in der dargestellten Ausführungsform des abstrahlenden LED-Chips. Es kann jedoch vorteilhaft sein, dieses Bild leicht zu defokussieren, um bereits eine erste Verwaschung der Bondingdrähte der Lichtquelle zu erreichen. Der Lichtmischstab 06 ist in dieser Ausführungsform ein gerader hohlleitender Stab mit einem rechteckigen Querschnitt.

Am Ausgang des Homogenisators 06 ist eine vorzugsweise variierbare Feldblende 07 mit einem rechteckigen Querschnitt im Format bzw. Seitenverhältnis des nicht dargestellten Bilderfassungssensors des Mikroskopes angeordnet. Durch Veränderung des Querschnittes kann die Beleuchtungseinrichtung vorteilhafterweise für verschiedene Zoomeinstellungen des Objektivs konfiguriert werden, damit die Größe der Objektbeleuchtung der Größe des Bildsensors möglichst entspricht. Auch bei einem Objektivwechsel kann die Größe der Objektbeleuchtung mit dieser Blende angepasst werden. Für die Effizienz der Beleuchtung hat es sich als besonders vorteilhaft erwiesen, wenn auch der Querschnitt des Lichtmischstabes 06 und der LED-Chip das Format bzw. das Seitenverhältnis des Bilderfassungssensors aufweisen.

Über einen Umlenkspiegel 08 wird das Beleuchtungslicht über eine weitere Zwischenoptik 09 kollimiert und fällt durch die Aperturblende 10 in ein Objektiv 12. Das Objektiv 12 erzeugt das Bild der variierbaren Feldblende 07 in der Objektebene 13.

In bekannter Weise ist im Strahlengang ein Planglas 11 angeordnet, um das erfasste Bild dem nicht dargestellten Bilderfassungssensor zuzuführen.

Die Vorteile dieser Ausführungsform sind insbesondere darin zu sehen, dass die Baugruppe von der Lichtquelle bis zum Umlenkspiegel sehr kompakt ausgeführt werden kann.

Eine zweite bevorzugte Ausführungsform der Hellfeld-Auflichtbeleuchtungsvorrichtung ist in Fig. 2 dargestellt. Gleiche Bezugsziffern bedeuten hierbei gleiche Bauteile. Die dargestellte Ausführungsform unterscheidet sich von der zuvor beschriebenen Ausführungsform darin, dass der Homogenisator als abgewinkeltes Lichtmischelement 14 gestaltet ist. Dadurch kann vorteilhafterweise der Umlenkspiegel entfallen. Diese Ausführungsform ist noch kompakter in der Bauweise.

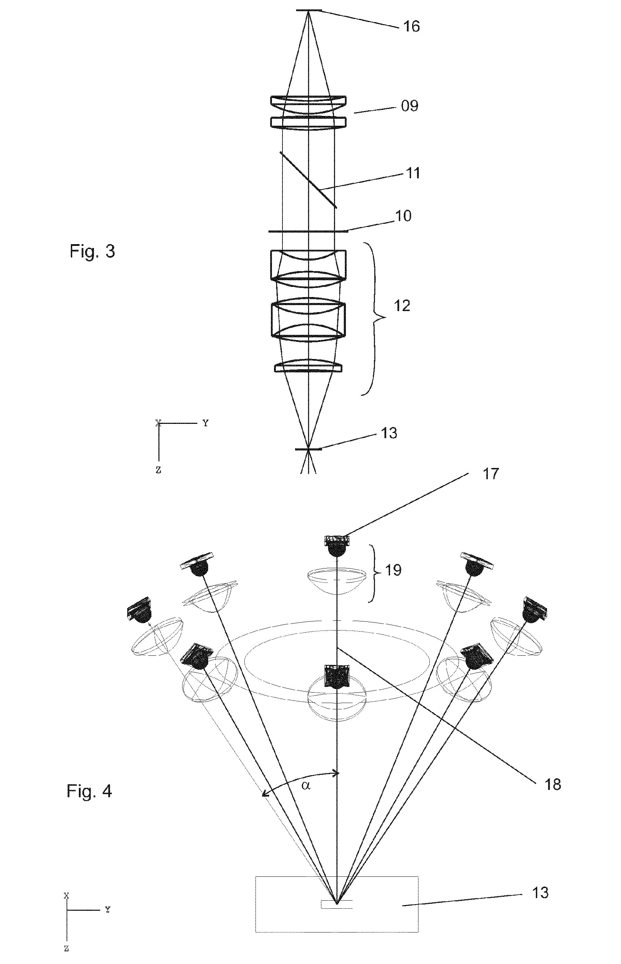

Bei der in Fig. 3 dargestellten Ausführungsform wird anstelle einer Halbleiter-LED eine OLED 16 (organische Leuchtdiode) verwendet, welche dasselbe Format wie der Bilderfassungssensor aufweist. Diese Ausführungsform ist besonders platzsparend und effizient, da weitere Optikbaugruppen, wie sie sonst zur Hellfeldbeleuchtung benötigt werden, nicht erforderlich sind. Außerdem sind OLED's preiswert in der Herstellung, weil sie beispielsweise drucktechnisch herstellbar sind. Vorzugsweise wird eine Weißlicht OLED verwendet. Alternativ kann über dichroitische Teiler eine RGB-Beleuchtung dimensioniert werden oder gar mittels monochromatischer OLEDs eine Fluoreszenzanregung erfolgen.

In Fig. 4 ist eine Prinzipskizze einer Anordnung von LED's 17 in einem Beleuchtungsring dargestellt. Die LED's 17 sind in einem Winkel α zu einer optischen Achse 18 des nicht dargestellten Objektives geneigt, so dass das Licht auf der Objektebene 13 entsprechend der Erfordernisse mittels einer Optikbaugruppe 18 gemischt, homogenisiert und fokussiert wird. Auch hier wird durch eine kritische Beleuchtung, d.h. die Lichtquelle bzw. Leuchtdiode wird in die Objektebene abgebildet, eine effiziente und platzsparende Anordnung erreicht.

Für eine noch bessere Effizienz ist es vorteilhaft, rechteckige LED-Chips, abhängig von ihrer Lage im Beleuchtungsring, entsprechend der rechteckigen Objektfeldform auszurichten. Dadurch wird eine noch bessere Effizienz erreicht, weil nur der tatsächlich vom Bildsensor erfasste Bereich beleuchtet wird.

Für eine vereinfachte Montage kann es vorteilhaft sein, die LED-Chips immer gleich zum konzentrische Ring auszurichten. Dadurch können Bauteile gleich ausgeführt werden und die Justage von Einzelgruppen ist identisch. Das führt aber zu einem leichten Effizienzverlust.

### Bezugszeichenliste

- 01: LED
- 02: Abstrahloptik
- 03: zur Aperturblende konjugierte Ebene
- 04: Zwischenoptik
- 05: -
- 06: Lichtmischstab
- 07: Feldblende
- 08: Umlenkspiegel
- 09: Zwischenoptik
- 10: Aperturblende
- 11: Planglas
- 12: Objektiv
- 13: Objektebene
- 14: Lichtmischstab, abgewinkelt
- 15: -
- 16: OLED
- 17: LED
- 18: optische Achse des Objektivs
- 19: Optikbaugruppe

## Patentansprüche

1. Verfahren zur Beleuchtung eines Objektes in einem digitalen Lichtmikroskop, bei dem eine Hellfeld-Auflichtbeleuchtung mittels einer Beleuchtungsvorrichtung mit Leuchtdioden (01) als Lichtquellen erfolgt, wobei weiterhin eine Dunkelfeld-Auflichtbeleuchtung mittels einer mit einem Objektiv des Lichtmikroskopes mechanisch und elektrisch koppelbaren Ringbeleuchtungsvorrichtung mit Leuchtddioden (17) als Lichtquellen erfolgt, wobei die Hellfeld- und die Dunkelfeld-Auflichtbeleuchtung separat ansteuerbar und überlagerbar sind, **dadurch gekennzeichnet, dass** die Hellfeld- und die Dunkelfeld-Auflichtbeleuchtung jeweils als "kritische Beleuchtung" konfiguriert sind, bei der ein Abbild der Lichtquelle in eine Objektebene projiziert wird.

2. Verfahren nach Anspruch 1, **dadurch gekennzeichnet, dass** Hellfeld-Auflichtbeleuchtung und Dunkelfeld-Auflichtbeleuchtung mittels Weisslicht-LED's (01, 17) erfolgen.

3. Verfahren nach Anspruch 1 oder 2, **dadurch gekennzeichnet, dass** die Ringbeleuchtungsvorrichtung über eine elektronische Schnittstelle des Objektivs ansteuerbar ist, wobei einzelne oder alle Leuchtdioden (01, 17) angesteuert werden.

4. Verfahren nach einem der Ansprüche 1 bis 3, **dadurch gekennzeichnet, dass** eine Helligkeit eines erfassten Bildes mittels einer variablen Aperturblende und eine Feldgröße eines abzubildenden Objektes mittels einer variablen Feldblende unabhängig voneinander einstellbar sind.

5. Digitales Lichtmikroskop zur Untersuchung eines Objektes umfassend ein Objektiv, eine Hellfeld-Beleuchtungsvorrichtung, eine Dunkelfeld-Beleuchtungsvorrichtung und eine Steuereinheit, wobei die Hellfeld-Beleuchtungsvorrichtung mindestens eine Leuchtdiode (01, 16) als Lichtquelle umfasst, und die Dunkelfeld-Beleuchtungsvorrichtung als Ringbeleuchtung mit mindestens zwei Leuchtdioden (17) als Lichtquellen ausgeführt ist und über eine elektronische Schnittstelle an das Objektiv gekoppelt ist, und wobei die Hellfeld-Beleuchtungsvorrichtung und die Dunkelfeld-Beleuchtungsvorrichtung über die Steuereinheit einzeln oder gleichzeitig ansteuerbar sind, **dadurch gekennzeichnet, dass** die Hellfeld-Beleuchtungsvorrichtung und die Dunkelfeld-Beleuchtungsvorrichtung als "kritische" Beleuchtung konfiguriert sind, bei der ein Abbild einer Lichtquelle in eine Objektebene (13) projiziert wird.

6. Lichtmikroskop nach Anspruch 5, **dadurch gekennzeichnet, dass** die Lichtquelle der Hellfeld-Auflichtbeleuchtungsvorrichtung eine Halbleiter-Weisslicht-LED (01) ist und im Strahlengang der Hellfeld-Auflichtbeleuchtungseinrichtung ein Homogenisator angeordnet ist.

7. Lichtmikroskop nach Anspruch 6, **dadurch gekennzeichnet, dass** der Homogenisator ein Lichtmischelement ist.

8. Lichtmikroskop nach Anspruch 6 oder 7, **dadurch gekennzeichnet dass**, am Ausgang des Homogenisators eine Feldblende (07) mit einem rechteckigen Querschnitt vorgesehen ist, wobei der rechteckige Querschnitt der Feldblende (07) dasselbe Seitenverhältnis aufweist, wie ein Bildsensor des Lichtmikroskopes

9. Lichtmikroskop nach Anspruch 8, **dadurch gekennzeichnet, dass** der Homogenisator dasselbe Seitenverhältnis aufweist, wie die Halbleiter-Weißlicht-LED.

10. Lichtmikroskop nach einem der Ansprüche 7 bis 9, **dadurch gekennzeichnet, dass** das Lichtmischelement zwischen einer Eintrittsöffnung und einer Austrittsöffnung des Lichtes eine 90°-Ablenkung des Lichtes realisiert.

11. Lichtmikroskop nach einem der Ansprüche 6 bis 10, **dadurch gekennzeichnet, dass** der Homogenisator ein hohlleitender Lichtmischstab (06, 14) mit einem rechteckigen Querschnitt ist.

12. Lichtmikroskop nach einem der Ansprüche 8 bis 11, **dadurch gekennzeichnet, dass** die Feldblende (07) in ihrer Größe variierbar ist.

13. Lichtmikroskop nach Anspruch 5, **dadurch gekennzeichnet, dass** die Leuchtdiode eine OLED (16) ist.

14. Lichtmikroskop nach Anspruch 5, **dadurch gekennzeichnet, dass** die Dunkelfeldbeleuchtungsvorrichtung als Beleuchtungsring zur konzentrischen Ankopplung an ein Objektiv des Lichtmikroskopes ausgeführt ist, welcher mindestens zwei Leuchtdioden (17) umfasst, die diametral auf dem Beleuchtungsring angeordnet sind.

15. Lichtmikroskop nach Anspruch 14, **dadurch gekennzeichnet, dass** die Leuchtdioden (17) einen rechteckigen Querschnitt mit einem Seitenverhältnis aufweisen, das einem Seitenverhältnis eines Bildsensors einer Bilderfassungseinheit des Lichtmikroskops gleicht, wobei die Leuchtdioden so ausgerichtet sind, dass ein rechteckiges Objektfeld ausgeleuchtet wird.

## Claims

1. Method for illuminating an object in a digital light microscope, wherein a bright field reflected-light illumination is effected by means of an illumination device comprising light-emitting diodes (01) as light sources, wherein a dark field reflected-light illumination is furthermore effected by means of a ring illumination device comprising light-emitting diodes (17) as light sources, said ring illumination device being mechanically and electrically couplable to an objective of the light microscope, wherein the bright field reflected-light illumination and the dark field reflected-light illumination are separately drivable and superimposable, **characterized in that** the bright field reflected-light illumination and the dark field reflected-light illumination are in each case configured as "critical illumination", in which an image of the light source is projected into an object plane.

2. Method according to Claim 1, **characterized in that** bright field reflected-light illumination and dark field reflected-light illumination are effected by means of white-light LEDs (01, 17).

3. Method according to Claim 1 or 2, **characterized in that** the ring illumination device is drivable via an electronic interface of the objective, wherein individual or all light-emitting diodes (01, 17) are driven.

4. Method according to any of Claims 1 to 3, **characterized in that** a brightness of a detected image is settable by means of a variable aperture stop and a field size of an object to be imaged is settable by means of a variable field stop independently of one another.

5. Digital light microscope for examining an object, comprising an objective, a bright field illumination device, a dark field illumination device and a control unit, wherein the bright field illumination device comprises at least one light-emitting diode (01, 16) as light source, and the dark field illumination device is embodied as ring illumination comprising at least two light-emitting diodes (17) as light sources and is coupled to the objective via an electronic interface, and wherein the bright field illumination device and the dark field illumination device are individually or simultaneously drivable via the control unit, **characterized in that** the bright field illumination device and the dark field illumination device are configured as "critical" illumination, in which an image of a light source is projected into an object plane (13).

6. Light microscope according to Claim 5, **characterized in that** the light source of the bright field reflected-light illumination device is a semiconductor white-light LED (01) and a homogenizer is arranged in the beam path of the bright field reflected-light illumination device.

7. Light microscope according to Claim 6, **characterized in that** the homogenizer is a light mixing element.

8. Light microscope according to Claim 6 or 7, **characterized in that** a field stop (07) having a rectangular cross section is provided at the output of the homogenizer, wherein the rectangular cross section of the field stop (07) has the same aspect ratio as an image sensor of the light microscope.

9. Light microscope according to Claim 8, **characterized in that** the homogenizer has the same aspect ratio as the semiconductor white-light LED.

10. Light microscope according to any of Claims 7 to 9, **characterized in that** the homogenizer is a light mixing element realizes a 90° deflection of the light between an entrance opening and an exit opening for the light.

11. Light microscope according to any of Claims 6 to 10, **characterized in that** the homogenizer is a hollow-waveguiding light mixing rod (06, 14) having a rectangular cross section.

12. Light microscope according to any of Claims 8 to 11, **characterized in that** the size of the field stop (07) is variable.

13. Light microscope according to Claim 5, **characterized in that** the light-emitting diode is an OLED (16).

14. Light microscope according to Claim 5, **characterized in that** the dark field illumination device is embodied as an illumination ring for concentric coupling to an objective of the light microscope, said illumination ring comprising at least two light-emitting diodes (17) which are arranged diametrically on the illumination ring.

15. Light microscope according to Claim 14, **characterized in that** the light-emitting diodes (17) have a rectangular cross section having an aspect ratio equal to an aspect ratio of an image sensor of an image detection unit of the light microscope, wherein the light-emitting diodes are aligned such that a rectangular object field is illuminated.

## Revendications

1. Procédé d'éclairage d'un objet dans un microscope optique numérique, selon lequel un éclairage incident à champ clair est réalisé au moyen d'un dispositif d'éclairage qui comprend des diodes électroluminescentes (01) comme sources de lumière, un éclairage incident à champ sombre étant en outre réalisé au moyen d'un dispositif d'éclairage annulaire qui peut être couplé mécaniquement et électriquement avec un objectif du microscope optique et qui comprend des diodes électroluminescentes (17) comme sources de lumière, les éclairages incidents à champ clair et à champ sombre pouvant être commandés séparément et étant superposables, **caractérisé en ce que** les éclairages incidents à champ clair et à champ sombre sont respectivement configurés en tant qu'« éclairage critique », avec lequel une représentation de la source de lumière est projetée dans un plan d'objet.

2. Procédé selon la revendication 1, **caractérisé en ce que** l'éclairage incident à champ clair et l'éclairage incident à champ sombre sont réalisés au moyen de LED à lumière blanche (01, 17).

3. Procédé selon la revendication 1 ou 2, **caractérisé en ce que** le dispositif d'éclairage annulaire peut être commandé par le biais d'une interface électronique de l'objectif, les diodes électroluminescentes (01, 17) étant commandées individuellement ou en totalité.

4. Procédé selon l'une des revendications 1 à 3, **caractérisé en ce qu'**une luminosité d'une image acquise et une grandeur de champ d'un objet à représenter sont réglables indépendamment l'une de l'autre respectivement au moyen d'un diaphragme variable et d'un diaphragme de champ variable.

5. Microscope optique numérique destiné à examiner un objet, comprenant un objectif, un dispositif d'éclairage à champ clair, un dispositif d'éclairage à champ sombre et une unité de commande, le dispositif d'éclairage à champ clair comprenant au moins une diode électroluminescente (01, 16) comme source de lumière, et le dispositif d'éclairage à champ sombre étant réalisé sous la forme d'un dispositif d'éclairage annulaire qui comprend au moins deux diodes électroluminescentes (17) comme sources de lumière et qui est couplé avec l'objectif par le biais d'une interface électronique, et le dispositif d'éclairage à champ clair et le dispositif d'éclairage à champ sombre pouvant être commandés individuellement ou simultanément par le biais de l'unité de commande, **caractérisé en ce que** le dispositif d'éclairage à champ clair et le dispositif d'éclairage à champ sombre sont configurés en tant qu'« éclairage critique », avec lequel une représentation d'une source de lumière est projetée dans un plan d'objet (13).

6. Microscope optique selon la revendication 5, **caractérisé en ce que** la source de lumière du dispositif d'éclairage incident à champ clair est une LED à lumière blanche en semiconducteur (01) et un homogénéisateur est disposé dans le trajet du faisceau du dispositif d'éclairage incident à champ clair.

7. Microscope optique selon la revendication 6, **caractérisé en ce que** l'homogénéisateur est un élément mélangeur de lumière.

8. Microscope optique selon la revendication 6 ou 7, **caractérisé en ce qu'**à la sortie de l'homogénéisateur se trouve un diaphragme de champ (07) ayant une section transversale rectangulaire, la section transversale rectangulaire du diaphragme de champ (07) possédant le même rapport des côtés qu'un capteur d'image du microscope optique.

9. Microscope optique selon la revendication 8, **caractérisé en ce que** l'homogénéisateur possède le même rapport des côtés que la LED à lumière blanche en semiconducteur.

10. Microscope optique selon l'une des revendications 7 à 9, **caractérisé en ce que** l'élément mélangeur de lumière réalise une déviation à 90° de la lumière entre une ouverture d'entrée et une ouverture de sortie.

11. Microscope optique selon l'une des revendications 6 à 10, **caractérisé en ce que** l'homogénéisateur est une tige mélangeuse de lumière (06, 14) guide d'ondes ayant une section transversale rectangulaires.

12. Microscope optique selon l'une des revendications 8 à 11, **caractérisé en ce que** le diaphragme de champ (07) est de taille variable.

13. Microscope optique selon la revendication 5, **caractérisé en ce que** la diode électroluminescente est une OLED (16).

14. Microscope optique selon la revendication 5, **caractérisé en ce que** le dispositif d'éclairage à champ sombre est réalisé sous la forme d'un anneau d'éclairage destiné à être accouplé concentriquement à un objectif du microscope optique, lequel possède au moins deux diodes électroluminescentes (17) qui sont disposées diamétralement sur l'anneau d'éclairage.

15. Microscope optique selon la revendication 14, **caractérisé en ce que** les diodes électroluminescentes (17) possèdent une section transversale rectangulaire avec un rapport des côtés qui est égal à un rapport des côtés d'une unité d'acquisition d'image du microscope optique, les diodes électroluminescentes étant orientées de telle sorte qu'un champ d'objet rectangulaire est éclairé.
